# EUROPEAN PATENT APPLICATION

(11) **EP 4 685 898 A1**
(43) Date of publication of application: **28.01.2026**
(21) Application number: 25190371.2
(22) Date of filing: 18.07.2025
(51) Int. Cl.: H01M 10/04, H01M 50/249, H01M 50/264, B60K 1/04, H01M 50/209

(54) **BATTERY PACK FOR AN ELECTRIC-POWERED ROAD VEHICLE AND ELECTRIC-POWERED ROAD VEHICLE PROVIDED WITH SUCH A BATTERY PACK**

(30) Priority: 26.07.2024 IT 202400017437
(71) Applicant: FERRARI S.p.A., 41100 Modena (IT)
(72) Inventor: FAVARETTO, Fabrizio, 41100 MODENA (IT)
(74) Representative: Studio Torta S.p.A.

(57) **Abstract**

Battery pack for a road vehicle with electric propulsion; wherein the battery pack comprises: a plurality of planar electrochemical cells arranged in pack along an axis A; and a support structure that comprises two plates opposite along the axis and parallel to the cells, wherein the two plates define the housing volume for the cells; wherein the cells at the beginning of life are housed in the support structure with an initial preload along the axis that generates a corresponding initial axial stress acting on the plates; wherein each cell comprises two flat faces orthogonal to the axis A and a thickness along the axis A that gradually increases over the life of the battery pack; wherein the plates 8, 9 are configured to move away from each other along the axis A such that an increase in cell thickness 6 does not result in a corresponding progressive increase in the axial stress acting on the plates 8, 9.

## Description

### CROSS-REFERENCE TO RELATED APPLICATIONS

This patent application claims priority from Italian patent application no. 102024000017437, filed on July 26, 2024, the entire disclosure of which is incorporated herein by reference.

### TECHNICAL FIELD

The technical field of the present invention relates to the field of road vehicles with electric propulsion. Such indication comprises both road vehicles with only electric propulsion and road vehicles with dual electric and endothermic propulsion. In even more detail, the present invention relates to a battery pack, i.e. a battery pack formed of a plurality of planar cells housed in pack along an axis A in a specific containment structure. As is known, there are two mechanical characteristics that the designer must consider in creation of a battery pack of this type. The first consists of the fact that an axial preload is necessary for correct functioning of the cells. The second is that, at the end of their life, the cells comprising the battery pack have, along the axis A, a greater thickness than at the beginning of their life and said progressive increase in thickness causes a corresponding progressive mechanical stress transferred from the cells to the frame that houses them. In this context, the present invention will address the problem of how to guarantee an optimal preload during the entire lifetime and how to limit (i.e. reduce with respect to the prior art) the stress transferred from the cells to the frame that houses them during the life of the battery pack. In fact, a lower stress acting on the structure allows the containment frame of the cells not to be oversized, with a consequent reduction in the weight of the battery pack, a factor that leads to clear benefits in terms of performance of the entire vehicle. Lastly, the present invention also relates to a road vehicle comprising the aforesaid battery pack.

### PRIOR ART

In the automobile sector, and particularly with reference to electric-powered road vehicles, it is known to use lithium batteries to store electrical energy to be delivered during electric propulsion. In fact, these lithium batteries offer a high energy density that is ideal for the implementation of electric power in the automobile sector. Currently, in fact, lithium polymers are, from a chemical viewpoint, the state of the art in manufacture of high-capacity batteries. In these batteries, interconnection in series and in parallel of various cells is envisaged, in order to reach the desired total voltage and total energy density for a battery pack. The battery modules usually available on the market (not only the automobile market, but also the consumer electronics one) often comprise planar pouch batteries, which have a much more limited thickness with respect to the other dimensions. Two extremely broad opposite faces are identified, orthogonal to the direction or axis of the battery pack, and four thin edges, in which the positive and negative terminals of the cell are arranged on one or on two opposite sides. The battery pack comprises a support structure that houses the plurality of electrochemical cells in pack and with an initial preload. In a known manner, an electric connector is also provided to connect the battery pack to the propulsion system of the vehicle and a control unit (normally called BMS - *"Battery Management System").*

Therefore, by way of summary, a battery pack comprises a plurality of planar electrochemical cells arranged in pack along an axis A and a rigid structure that houses the cells. In particular, the rigid support structure comprises two plates parallel to the cells and on opposite sides of the battery pack. The distance between these plates therefore defines the housing volume of the cells along the axis A. As already stated, the cells are housed in the support structure in preload configuration along the axis A. The plates are therefore sized to support said initial stress. Furthermore, as mentioned, each cell comprises two flat faces orthogonal to the axis A and a thickness along the axis A that, starting from a minimum beginning-of-life value, progressively increases up to a maximum or end-of-life thickness. In order to allow and to compensate for said increase in thickness, the cells are separated from one another along the axis A and, between each pair of adjacent cells, it is known to provide for an intermediate body or planar separator (called "foam") in contact with the flat faces of the cells. Said intermediate planar separator is configured (i.e. it is made of a suitable material) to be compressed during the progressive increase in thickness of the cells. Therefore, as the thickness of the cells increases, the stress along the axis A is partly absorbed by the foam separators and partly discharged onto the support plates, which must therefore be configured to support not only the state of initial stress, but also the progressive increase in such stress.

New-generation lithium cells are currently available, which nonetheless require a constant and very high compression on the entire surface of the cells. Since the axial stress discharged onto the plates is therefore very high in the initial state, it is necessary to find a solution that is capable of reducing the increase in (or maintaining constant) the stress transferred from the cells to the frame that houses them during the life of the battery pack. Limiting the stress allows the containment frame of the cells to be sized as "more lightweight", with a consequent reduction in the weight of the battery pack. Said reduction in weight leads to clear benefits in terms of performance of the entire vehicle.

### DESCRIPTION OF THE INVENTION

The object of the present invention is therefore to provide a battery pack for an electric-powered road vehicle capable of overcoming the drawbacks described above. In addition to the battery pack itself as claimed in claim 1, the present invention also extends to the electric road vehicle provided with such battery pack.

If the intention were to define the present invention more generally, its starting point is a battery pack comprising a plurality of electrochemical cells, preferably with lithium-ion technology, in which the cells are planar and arranged in pack alongside one another along a direction or axis A. The battery pack comprises (as known) a containment structure that serves as a rigid support that houses the cells in pack with each other along the axis A. At opposite ends along the axis A, the support structure comprises two retaining plates. Each cell comprises (as known) two flat faces orthogonal to the axis A and a thickness along the axis A that, starting from a minimum beginning-of-life value, progressively increases during the life of the battery pack up to a maximum or end-of-life thickness. As known, the cells at beginning of life are housed between the plates already in a state of pre-compression that transfers a corresponding stress onto the plates (rigid). Starting from such known structure, according to the present invention the plates are not always fixed at the same distance from each other during the entire life of the battery pack, but are, on the other hand, configured to move away from one another along the axis A so as to "support" the increase in thickness of the cells and thus avoid such increase in thickness from resulting in a corresponding increase in the axial stress on the plates. In this manner, the initial compression according to design on the cells is guaranteed and an excessive load on the plates due to the increase in thickness of the cells is avoided.

This distancing of the plates can be performed in many different ways, all falling within the general concept of the present invention as stated above.

According to a first example, a manually operable device is provided to move the plates away from each other in steps along the axis A. Therefore, according to this example, the adjustment of the battery pack (distance between the plates) is performed during the technical assistance service phases or during the scheduled maintenance procedures. An embodiment of such a manual adjustment device will be shown in the drawings and provides for a plurality of rope elements wrapped around the battery pack and configured to hold the plates in a fixed position. In such example, the manually operable device to move the plates away from each other along the axis A comprises a non-reversible screw-mother screw coupling configured to unwind the rope elements by a sufficient amount to allow a corresponding moving away of the plates under the thrust of the expanding cells. The water tightness of the battery is always guaranteed by specific gaskets that seal the adjustment pin of the screw-mother screw coupling. The battery pack is further designed so as to be able to guarantee adjustment repositioning, therefore leaving free the spaces needed for recovery of the adjustment movements.

According to another example, a spontaneously actuated device (i.e. automatic, without the need for human intervention) is provided to move the plates away from each other along the axis A. Such automatic adjustment device can be configured to progressively move the plates away from each other along the axis A during the progressive increase in the thickness of the cells. In this case, the adjustment is substantially continuous.

Alternatively, the automatic adjustment device for adjusting the distance of the plates can be configured to move the plates away from each other along the axis A only when a predetermined extra stress value (with respect to the initial stress) is exceeded during the progressive increase in the thickness of the cells. In this case, a kind of automatic adjustment in steps is implemented. An example of such a device can be obtained in the form of a torque limiter, i.e. a device formed of a clutch/brake acting on a shaft onto which the ropes are partially wrapped. The torque limiter has a preload capable of maintaining the shaft locked up until a pre-set torque that releases unwinding of the ropes is exceeded. Unwinding of the ropes, and the consequent loosening of the cells, progressively lowers the axial stress until the torque limiter locks the cells in the new position to await the next exceeding of the pre-set torque.

Concerning the seal on the upper and lower faces of the battery pack, the cells can comprise superiorly and inferiorly lip elements protruding along the axis A, staggered between two adjacent cells and at least partially overlapping. In this manner, the battery pack is sealed superiorly and inferiorly also when the distance between the cells increases. Even more preferably, the aforesaid lip elements have shaped hooked edges that penetrate one into the other so as to define an end stroke of maximum distance between two adjacent cells.

Lastly, the present invention also extends to an electric-powered road vehicle on which a battery pack according to the object of the appended claims is installed. Preferably, the battery pack is arranged transversely to a longitudinal direction of the vehicle and is mounted on a frame posterior to a passenger compartment.

### LIST OF DRAWINGS

The present invention will now be described with reference to the appended drawings, which illustrate several non-limiting embodiments thereof, wherein:
- Figure 1 is a schematic and perspective view of an electric-powered vehicle that can be provided with a battery pack in accordance with the present invention;
- Figure 2 is a schematic and perspective view of a battery pack for an electric-powered vehicle according to the prior art;
- Figure 3 is a schematic and perspective view of a battery pack for an electric-powered vehicle according to the present invention;

- Figure 4 is an enlarged view of a detail of a module of the battery pack of Figure 3;
- Figures 5 and 6 show a detail of a module of the battery pack of Figure 3 in two different work positions.

### DESCRIPTION OF THE DRAWINGS

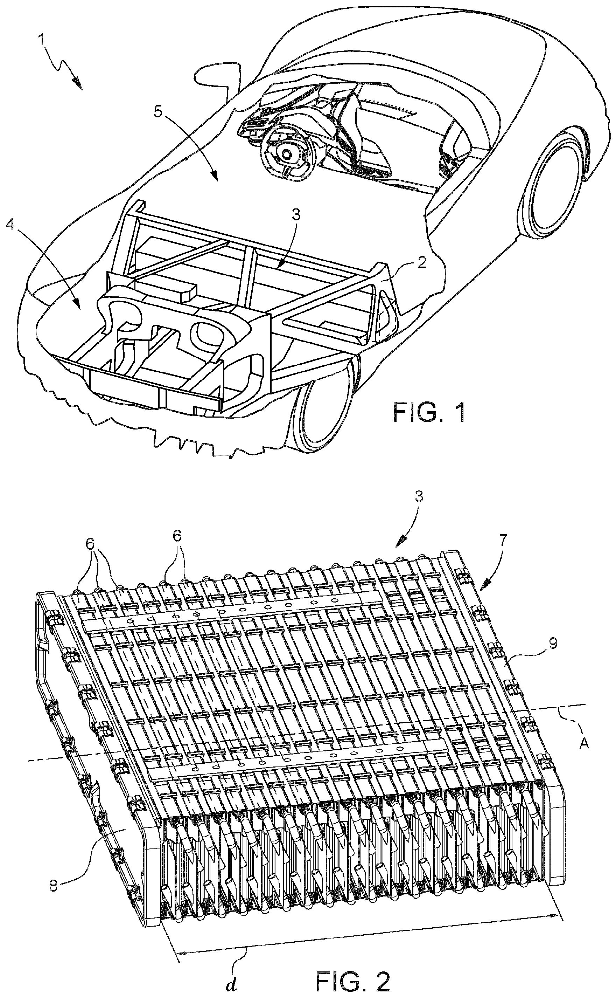

With reference to Figure 1, the number 1 indicates as a whole a road vehicle provided with two front wheels and two rear wheels. The road vehicle 1 is a vehicle with at least partially electric propulsion and is provided with a frame 2. The road vehicle 1 comprises a battery pack 3, in this example supported by the frame 2 inside an engine compartment 4. As is visible, preferably the battery pack is arranged posterior to a passenger compartment 5, for example on a vehicle platform, behind the seats contained inside the passenger compartment 5.

An example of a battery pack 3 that can be improved according to the present invention is visible in Figure 2. In this example, and according to the present invention, the battery pack 3 has an elongated shape along an axis A and has a substantially parallelepiped shape. As is visible in Figure 1, the battery pack 3 can be arranged transversely to a longitudinal axis of the vehicle. In particular, the battery pack 3 is suitable for being connected to an electric propulsion system (not shown) of the vehicle 1 and is adapted to store the electrical energy produced by an electric machine (not shown) or released by other sources. As is visible in Figure 2, the battery pack 3 comprises a plurality of planar electrochemical cells 6 arranged in pack along an axis A and a support structure 7 that comprises two retaining plates 8, 9 opposite along the axis A and parallel to the cells 6. The two plates 8, 9 define a distance d along the axis A and the housing volume for the cells 6. As is known, the cells 6 at the beginning of life are housed in the support structure 7 with an initial preload along the axis A that generates a corresponding initial axial stress acting on the plates 8, 9. As is also known, each cell 6 comprises two flat faces orthogonal to the axis A and a thickness along the axis A that progressively increases over the life of the battery pack 3. According to the prior art, the distance d indicated in Figure 2 is fixed.

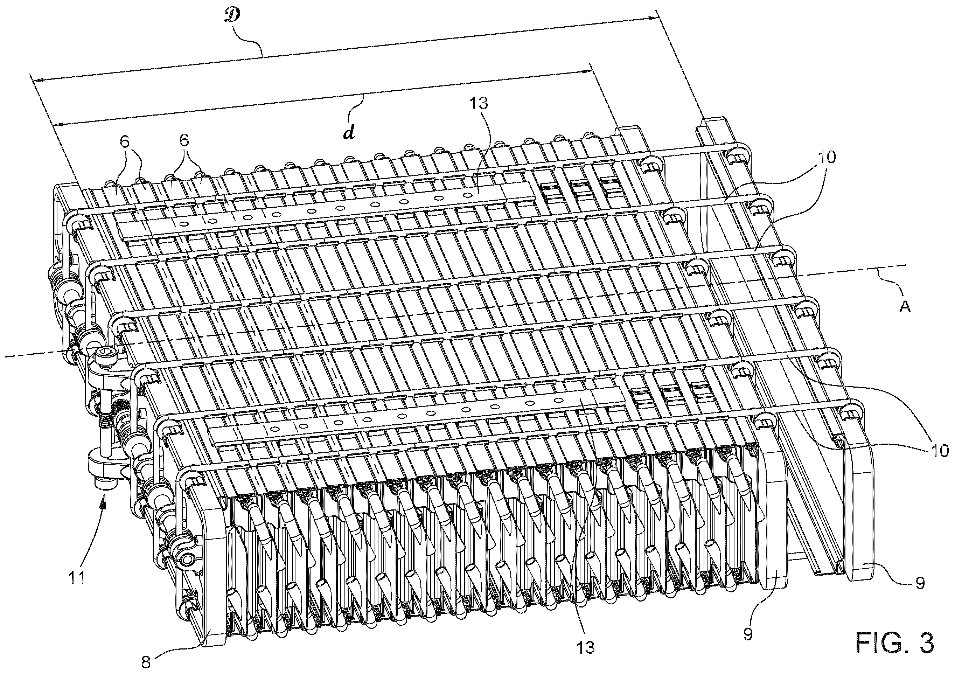

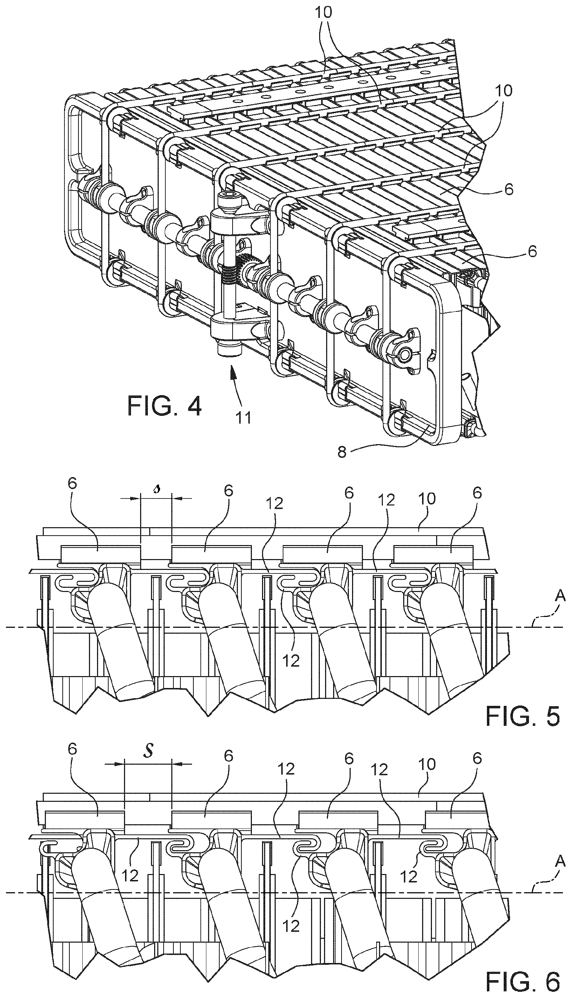

Figure 3 shows a battery pack according to the present invention, in which it can be noted how the plates 8, 9 are configured to move away from each other along the axis A such that an increase in the thickness of the cells 6 does not result in a corresponding increase in the axial stress acting on the plates 8, 9. In other words, the distance d of Figure 1 increases until it reaches the distance indicated with D and thus the increase in thickness of the cells does not produce an extra stress to be discharged onto the plates. In the example shown, a manually operable device is provided to move the plates 8, 9 away from each other in steps along the axis (A). As is visible in Figure 4, a plurality of rope elements 10 is provided wrapped around the battery pack 3 and configured to hold the plates 8, 9 in a fixed position; wherein the manually operable device to move the plates 8, 9 away from each other along the axis A comprises a non-reversible screw-mother screw coupling 11 configured to unwind the rope elements 10. The reference numbers 13 in Figure 3 identify guides for guiding the expansion of the battery pack 3 along the axis A.

Lastly, as is visible in Figures 5 and 6, the cells 6 comprise superiorly and inferiorly lip elements 12 protruding along the axis A, staggered between two adjacent cells 6 and at least partially overlapping. In this manner, as the distance between the cells increases (from s in Figure 5 to S in Figure 6), the battery pack 3 is always sealed superiorly and inferiorly. It can also be noted that, in this example, the lip elements have shaped hooked edges so as to define an end stroke of maximum distance S between two adjacent cells.

## Claims

1. Battery pack (3) for a road vehicle (1) with electric propulsion;
wherein the battery pack (3) comprises:
- a plurality of (6) planar electrochemical cells arranged in pack along an axis (A);
- a support structure (7) comprising two retaining plates (8, 9) opposite along the axis (A) and parallel to the cells (C), wherein the two plates (8, 9) define the housing volume for the cells (6);
wherein the cells (6) at the beginning of life are housed in the support structure (7) with an initial preload along the axis (A) that generates a corresponding initial axial stress acting on the plates (8, 9);
wherein each cell (6) comprises two flat faces orthogonal to the axis (A) and a thickness along the axis (A) that gradually increases over the life of the battery pack (3);
**characterized in that**
the plates (8, 9) are configured to move away from each other along the axis (A) such that an increase in cell thickness (6) does not result in a corresponding increase in the axial stress on the plates (8, 9).

2. Battery pack (3) as claimed in claim 1, wherein a manually operable device is provided to move the plates (8, 9) away from each other along axis (A).

3. Battery pack (3) as claimed in claim 2, wherein a plurality of rope elements (10) is provided wrapped around the battery pack (3) and configured to hold the plates (8, 9) in place; wherein the manually operable device to move the plates (8, 9) away from each other along the axis (A) comprises a non-reversible screw-mother screw coupling (11) configured to unwind the rope elements (10).

4. Battery pack (3) as claimed in claim 2, wherein an automatically actuated device is provided to move the plates (8, 9) away from each other along axis (A).

5. Battery pack (3) as claimed in claim 4, wherein the automatically actuated device for moving the plates (8, 9) away from each other along axis (A) is configured to progressively move the plates (8, 9) away from each other along the axis (A) as the cell thickness (6) progressively increases.

6. Battery pack (3) as claimed in claim 4, wherein the automatically actuated device for moving the plates (8, 9) away from each other along the axis (A) is configured to move the plates (8, 9) away from each other along the axis (A) in steps upon exceeding a predefined value of strain during the progressive increase of cell thickness (6).

7. Battery pack (3) as claimed in any of the preceding claims, wherein the cells (6) comprise superiorly and inferiorly lip elements (12) protruding along the axis (A), staggered between two adjacent cells (6) and at least partially overlapping so even as the distance (S) between the cells increases the battery pack (3) is sealed superiorly and inferiorly.

8. Battery pack (3) as claimed in claim 7, wherein the lip elements have shaped hooked edges that interpenetrate so as to define an end of maximum distance (S) between two adjacent cells.

9. Electrically propelled road vehicle (1); wherein the vehicle (1) comprises a battery pack (3) according to any one of the preceding claims.

10. Vehicle as claimed in claim 9, wherein the battery pack (3) is arranged transversely to a longitudinal direction of the vehicle (1) and is mounted on a frame (2) posterior to a passenger compartment (5).
